(19) Europäisches Patentamt
European Patent Office
Office européen des brevets

(11) EP 3 794 944 B1

(12) EUROPEAN PATENT SPECIFICATION

(45) Date of publication and mention of the grant of the patent:
**18.10.2023 Bulletin 2023/42**

(21) Application number: **19803043.9**

(22) Date of filing: **14.05.2019**

(51) International Patent Classification (IPC):
***A01M 21/04** (2006.01)* ***A01N 25/32** (2006.01)*
***A01N 37/18** (2006.01)* ***A01N 43/54** (2006.01)*
***A01N 47/36** (2006.01)*

(52) Cooperative Patent Classification (CPC):
(C-Sets available)
**A01M 21/043; A01N 25/32; A01N 43/54; A01N 47/36** (Cont.)

(86) International application number:
**PCT/JP2019/019014**

(87) International publication number:
**WO 2019/221089 (21.11.2019 Gazette 2019/47)**

(54) **SAFENER**

SAFENER

PHYTOPROTECTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2018 JP 2018094483**

(43) Date of publication of application:
**24.03.2021 Bulletin 2021/12**

(73) Proprietor: **Nippon Soda Co., Ltd.**
**Tokyo 100-8165 (JP)**

(72) Inventors:
- **IKEDA,Yoji**
  **Makinohara-shi, Shizuoka 421-0412 (JP)**
- **HAYAMA, Daisuke**
  **Makinohara-shi, Shizuoka 421-0412 (JP)**
- **YAMADA, Shigeo**
  **Makinohara-shi, Shizuoka 421-0412 (JP)**

(74) Representative: **Wibbelmann, Jobst**
**Wuesthoff & Wuesthoff**
**Patentanwälte PartG mbB**
**Schweigerstrasse 2**
**81541 München (DE)**

(56) References cited:
**WO-A1-2010/001563**
**WO-A1-2017/183664**
**DE-A1-102011 080 004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 25/32, A01N 37/18, A01N 37/22, A01N 39/02, A01N 43/54, A01N 43/90, A01N 43/90, A01N 47/22, A01N 47/36, A01N 47/38;**
**A01N 43/54, A01N 37/18;**
**A01N 47/36, A01N 37/18, A01N 43/54**

## Description

[Technical Field]

The present invention relates to the use of picarbutrazox as a safener, in a safener composition, and methods for controlling weeds while reducing harm to a beneficial plant caused by a herbicidal ingredient.
Priority is claimed on Japanese Patent Application No. 2018-094483, filed on May 16, 2018 in Japan.

[Background Art]

Weeds deprive beneficial plants of nutrients and block the sun's rays as they grow taller, which cause poor growth. Herbicides are used to control weeds. However, the herbicides may harm not only weeds but also beneficial plants. Safeners for a herbicide such as fenclorim and fenchlorazole are known to control weeds while reducing phytotoxicity to beneficial plants.
As a technique related to the present invention, Patent Literature 1 discloses a plant growth promoter containing a tetrazoyloxime derivative as an active ingredient. In Patent Literature 1, it is described that the tetrazoyloxime derivative can be used after being mixed with various known and commonly used agricultural chemicals such as an agricultural and horticultural fungicide, a plant growth regulator, an insecticide, and an acaricide, a fertilizer, and the like. However, there is neither a description that the tetrazoyloxime derivative can be used in mixture with a herbicide nor a description that the tetrazoyloxime derivative has an effect of reducing phytotoxicity caused by a herbicide.
Patent Literatures 2 and 3 disclose a fungicide composition containing at least one active ingredient selected from the group consisting of a fungicide hydroxymoyl-tetrazole derivative, a bulking agent and/or a surfactant, an insecticide, an attractant, a chemosterilant, a bactericide, an acaricide, a nematode, a fungicide, a growth regulator, a herbicide, a fertilizer, a safener, and a semiochemical. However, there is neither a description that the fungicide hydroxymoyl-tetrazole derivative exerts an effect of reducing phytotoxicity nor a description that the fungicide hydroxymoyl-tetrazole derivative induces such an effect.
In Patent Literature 4, it is described that a tetrazoyloxime derivative can be used after being mixed with various known and commonly used agricultural chemicals such as an agricultural and horticultural fungicide, a herbicide, a plant growth regulator, an insecticide, and an acaricide, a fertilizer, and the like. However, there is neither a description that the tetrazoyloxime derivative exerts an effect of reducing phytotoxicity nor a description that the tetrazoyloxime derivative induces such an effect.
DE 10 2011 080 004 A1 discloses the use of carbamate-fungicides as safeners for herbicides, but does not disclose any examples for proving this phytotoxicity reducing effect by the carbamate fungicides. Furthermore, the document does not disclose the use of picarbutrazox.
There is no finding that a compound known as a fungicide has the effect of reducing phytotoxicity caused by a herbicide as described above. In addition, there is no finding that the tetrazoyloxime derivative has an effect of reducing phytotoxicity caused by a herbicide.

[Citation List]

[Patent Literature]

[Patent Literature 1]
PCT International Publication No. WO2010/001563A
[Patent Literature 2]
Published Japanese Translation No. 2014-512358 of the PCT International Publication
[Patent Literature 3]
Published Japanese Translation No. 2014-509599 of the PCT International Publication
[Patent Literature 4]
Japanese Unexamined Patent Application, First Publication No. 2003-137875

[Summary of Invention]

[Technical Problem]

An object of the present invention is to provide a safener, a safener composition, a method for controlling weeds,

and a method for controlling weeds while reducing harm to a beneficial plant caused by a herbicidal ingredient.

[Solution to Problem]

As a means for solving the problems, the present invention including the following aspects has been completed.

[1] The use of picarbutrazox as a safener for a herbicide.
[2] The use as described in [1] wherein picarbutrazox is comprised in a safener composition further comprising a herbicidal ingredient.
[3] The safener composition as described in [2], further containing a surfactant.
[4] A method for controlling weeds while reducing harm to a beneficial plant caused by a herbicidal ingredient contained in a safener composition, the method including applying the safener composition as described in [2] or [3] during a cultivation of the beneficial plant.
[5] A method for controlling weeds while reducing harm to a beneficial plant caused by a herbicidal ingredient, the method including applying picarbutrazox while applying the herbicidal ingredient during a cultivation of the beneficial plant.
[6] A method for controlling weeds while reducing harm to a beneficial plant caused by a herbicidal ingredient, the method including applying the herbicidal ingredient and subsequently applying picarbutrazox during a cultivation of the beneficial plant.
[7] A method for controlling weeds while reducing harm to a beneficial plant caused by a herbicidal ingredient, the method including applying picarbutrazox and subsequently applying the herbicidal ingredient during a cultivation of the beneficial plant.
[8] The method as described in any one of [4] to [7], in which the beneficial plant is lawn grass, wheat, maize, rapeseed, rice, or soybean.

[Advantageous Effects of Invention]

The safener for a herbicide of the present invention can reduce harm to a beneficial plant caused by an herbicidal ingredient included in a herbicide and the like.

According to the safener composition and the method for controlling weeds of the present invention, weeds growing in the vicinity of a beneficial plant such as lawn grass, wheat, maize, rapeseed, rice, and soybean can be controlled without inhibiting the growth of the beneficial plant.

[Description of Embodiments]

((A) Picarbutrazox)

The safener for a herbicide of the present invention is formed by containing picarbutrazox.

Picarbutrazox is a compound represented by Formula (I) (CAS No. 500207-04-5). The safener for a herbicide of the present invention may be picarbutrazox as it is or may be used as formulations in various dosage forms such as a dustable powder, a granule, a wettable powder, a water soluble powder, a water dispersible granule, a water soluble granule, a suspension concentrate, and an emulsifiable concentrate. Known additives and carriers can be used in the process of preparing formulations. As the picarbutrazox made into a formulation, a commercially available product may be used, and QUINTECT (registered trademark) water dispersible granules (a product with a content of 20% by mass, manufactured by Nippon Soda Co., Ltd.), a PYTHILOCK (registered trademark) suspension concentrate (a product with a content of 5% by mass, manufactured by Nippon Soda Co., Ltd.), a NAEFINE (registered trademark) dustable powder (a product with a content of 0.7% by mass, manufactured by Nippon Soda Co., Ltd.), and the like are known.

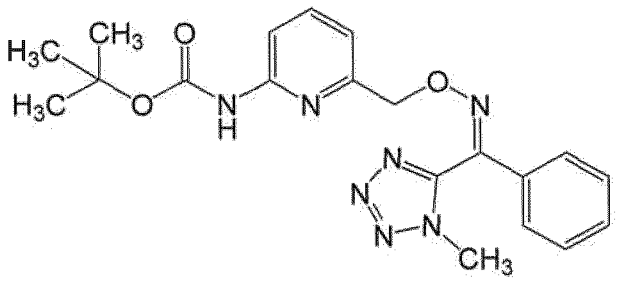

(I)

(Safener Composition)

The safener composition of the present invention contains picarbutrazox and a herbicidal ingredient.

The herbicidal ingredient used in the present invention is not particularly limited as long as it can control weeds, and is, for example, a component contained in an agricultural and horticultural herbicide, and the like.

((B) Herbicidal Ingredient)

Specific examples of the herbicidal ingredient include:

herbicidal ingredients which are considered to exhibit herbicidal efficacy by disturbing hormonal actions of plants (site of action: indole acetic acid-like activity, Classification of the Herbicide Resistance Action Committee (hereinafter referred to as "HRAC classification"): O), such as phenoxy-based herbicidal ingredients such as 2,4-D, 2,4-DB, 2,4-DP, MCPA, MCPB (MCPB-ethyl), MCPP (mecoprop), and clomeprop; benzoic acid-based herbicidal ingredients such as 2,3,6-TBA, dicamba, and chloramben; pyridinecarboxylic acid-based herbicidal ingredients such as picloram, triclopyr, clopyralid, aminopyralid, and fluroxypyr; quinolinecarboxylic acid-based herbicidal ingredients such as quinclorac and quinmerac; and others such as benazolin;

herbicidal ingredients which are considered to exhibit herbicidal efficacy by inhibiting auxin transports of plants (site of action: inhibition of auxin transport, HRAC classification: P), such as phthalamate semicarbazone-based herbicidal ingredients such as naptalam and diflufenzopyr;

herbicidal ingredients which are considered to exhibit herbicidal efficacy by inhibiting photosynthesis of plants (site of action: photosynthesis (Photochemistry II) inhibitors, HRAC classification: C1 to C3), such as urea-based herbicidal ingredients such as chlorotoluron, diuron, fluometuron, linuron, isoproturon, tebuthiuron, isouron, siduron, chloroxuron, chlorbromuron, dimefuron, ethidimuron, fenuron, methabenzthiazuron, metobromuron, metoxuron, monolinuron, and neburon; triazine-based herbicidal ingredients such as simazine, atrazine, atraton, simetryn, prometryn, dimethametryn, hexazinone, metribuzin, metamitron, terbuthylazine, cyanazine, ametryn, cybutryne, propazine, desmetryn, prometon, terbumeton, terbutryn, and trietazine; uracil-based herbicidal ingredients such as bromacil, lenacil, and terbacil; anilide-based herbicidal ingredients such as propanil and pentanochlor; carbamate-based herbicidal ingredients such as desmedipham and phenmedipham; hydroxybenzonitrile-based herbicidal ingredients such as bromoxynil, ioxynil, and bromofenoxim; and others such as pyridate, chloridazon, bentazone, amicarbazone, methazole, and pyridafol;

quaternary ammonium salt-based herbicidal ingredients such as paraquat and diquat, which are considered to exhibit rapid herbicidal efficacy by allowing themselves to become free radicals in plant bodies and generate active oxygen (site of action: Photochemistry I electron conversion, HRAC classification: D);

herbicidal ingredients which are considered to exhibit herbicidal efficacy by inhibiting chlorophyll biosynthesis of plants to cause abnormal accumulation of photosensitized peroxidants in plants (site of action: inhibition of a protoporphyrinogen oxidase, HRAC classification: E), such as diphenyl ether-based herbicidal ingredients such a chlomethoxyfen, bifenox, acifluorfen, fomesafen, oxyfluorfen, lactofen, ethoxyfen-ethyl, fluoroglycofen-ethyl, and halosafen; cyclic imide-based herbicidal ingredients such as chlorphthalim, flumioxazin, flumiclorac-pentyl, and cinidon-ethyl; thiadiazole-based herbicidal ingredients such as fluthiacet-methyl and thidiazimin; oxadiazole-based herbicidal ingredients such as oxadiargyl and oxadiazon; triazolinone-based herbicidal ingredients such as azafenidin, sulfentrazone, carfentrazone-ethyl, and bencarbazone; phenyl pyrazole-based herbicidal ingredients such as fluazolate and pyraflufen-ethyl; pyrimidine dione-based herbicidal ingredients such as benzfendizone and butafenacil; and others such as pentoxazone, profluazol, pyraclonil, and flufenpyr-ethyl;

herbicidal ingredients which are considered to exhibit herbicidal efficacy characterized by a bleaching symptom by inhibiting the biosynthesis of a plant pigment such as carotenoids (site of action: pigment biosynthesis inhibitors, HRAC classification: F1 to F4), such as pyrazole-based herbicidal ingredients such as pyrazolynate, pyrazoxyfen,

benzofenap, topramezone, and pyrasulfotole; triketone-based herbicidal ingredients such as sulcotrione, mesotrione, tefuryltrione, and tembotrione; isoxazole-based herbicidal ingredients such as isoxaflutole and isoxachlortole; and others such as amitrole, fluometuron, aclonifen, norflurazon, fluridone, flurtamone, diflufenican, clomazone, benzobicyclon, picolinafen, beflubutamid, and flurochloridone;

herbicidal ingredients which are considered to exhibit herbicidal efficacy by inhibiting an acetyl-CoA carboxylase of plants (site of action: inhibition of an acetyl-CoA carboxylase, HRAC classification: A), such as aryloxyphenoxypropionic acid-based herbicidal ingredients such as diclofop-methyl, flamprop-M-methyl, fluazifop-butyl, haloxyfop-methyl, quizalofop-ethyl, cyhalofop-butyl, fenoxaprop-ethyl, metamifop, clodinafop-propargyl, and propaquizafop-P-ethyl; cyclohexanedione-based herbicidal ingredients such as alloxydim, clethodim, sethoxydim, tralkoxydim, butroxydim, tepraloxydim, profoxydim, and cycloxydim; and phenyl pyrazoline-based herbicidal ingredients such as pinoxaden;

herbicidal ingredients which are considered to exhibit herbicidal efficacy by inhibiting amino acid biosynthesis of plants (site of action: inhibition of an acetolactic acid synthase, HRAC classification: B), such as sulfonyl urea-based herbicidal ingredients such as chlorimuron-ethyl, sulfometuron-methyl, primisulfuron-methyl, bensulfuron-methyl, chlorsulfuron, metsulfuron-methyl, cinosulfuron, pyrazosulfuron-ethyl, azimsulfuron, flazasulfuron, rimsulfuron, nicosulfuron, imazosulfuron, cyclosulfamuron, prosulfuron, flupyrsulfuron, halosulfuron-methyl, thifensulfuron-methyl, ethoxysulfuron, oxasulfuron, ethametsulfuron-methyl, iodosulfuron, sulfosulfuron, triasulfuron, tribenuron-methyl, tritosulfuron, foramsulfuron, tribenuron-methyl, mesosulfuron-methyl, orthosulfamuron, triflusulfuron-methyl, amidosulfuron, propyrisulfuron, and TH-547; triazolopyrimidine sulfonamide-based herbicidal ingredients such flumetsulam, metosulam, diclosulam, cloransulam-methyl, florasulam, penoxsulam, and pyroxsulam; imidazolinone-based herbicidal ingredients such as imazapyr, imazethapyr, imazaquin, imazamox, imazamethabenz, and imazapic; pyrimidinyl salicylic acid-based herbicidal ingredients such as pyrithiobac, bispyribac-sodium, pyriminobac-methyl, pyribenzoxim, pyriftalid, and pyrimisulfan; and sulfonyl aminocarbonyl triazolinone-based herbicidal ingredients such as flucarbazone, propoxycarbazone, and thiencarbazone-methyl;

herbicidal ingredients which are considered to exhibit herbicidal efficacy by inhibiting amino acid biosynthesis in plants (site of action: inhibition of an EPSP synthase, HRAC classification: G), such as glyphosate, glyphosate-ammonium, glyphosate-isopropylamine (glyphosate-isopropylammonium), and sulfosate;

herbicidal ingredients which are considered to exhibit herbicidal efficacy by inhibiting amino acid biosynthesis in plants (site of action: inhibition of a glutamine synthetase, HRAC classification: H), such as phosphinic acid-based herbicidal ingredients such as glufosinate and bilanafos;

herbicidal ingredients which are considered to exhibit herbicidal efficacy by inhibiting cell mitosis of plants (site of action: inhibition of microtubule polymerization, HRAC classification: K1), such as dinitroaniline-based herbicidal ingredients such as trifluralin, oryzalin, pendimethalin, ethalfluralin, benfluralin, prodiamine, butoralin, and dinitramine; benzamide-based herbicidal ingredients such as propyzamide and tebutam; organic phosphorus-based herbicidal ingredients such as amiprofos-methyl and butamifos; and pyridine-based herbicidal ingredients such as dithiopyr and thiazopyr;

herbicidal ingredients which are considered to exhibit herbicidal efficacy by inhibiting cell mitosis of plants (site of action: inhibition of mitosis/microtubule formation, HRAC classification: K2), such as phenyl carbamate-based herbicidal ingredients such as propham, chlorpropham, and carbetamide;

herbicidal ingredients which are considered to exhibit herbicidal efficacy by inhibiting cell division or inhibiting biosynthesis of a very long chain fatty acid of plants (site of action: inhibition of VLCFA, HRAC classification: K3), such as chloroacetamide-based herbicidal ingredients such as alachlor, metazachlor, butachlor, pretilachlor, metolachlor, S-metolachlor, thenylchlor, pethoxamid, acetochlor, propachlor, propisochlor, dimethenamid, dimethenamid-P, and dimethachlor; acetamide-based herbicidal ingredients such as diphenamid, napropamide, and naproanilide; oxyacetamide-based herbicidal ingredients such as flufenacet and mefenacet; long-chain fatty acid inhibitors such as pyroxasulfone; and others such as fentrazamide, cafenstrole, anilofos, and piperophos;

herbicidal ingredients which are considered to exhibit herbicidal efficacy by inhibiting lipid biosynthesis of plants (site of action: inhibition of lipid synthesis (non-ACCase inhibition), HRAC classification: N), such as thiocarbamate-based herbicidal ingredients such as molinate, dimepiperate, EPTC, butylate, cycloate, esprocarb, orbencarb, pebulate, prosulfocarb, thiobencarb, tiocarbazil, tri-allate, and vernolate; benzofuran-based herbicidal ingredients such as benfuresate and ethofumesate; and others such as bensulide, TCA-sodium (TCA), dalapon, and flupropanate; and herbicidal ingredients which are considered to exhibit herbicidal efficacy by inhibiting a synthase of plants (site of action: inhibition of dihydropteroate synthase, HRAC classification: I), such as carbamate-based herbicidal ingredients such as asulam;

herbicidal ingredients which are considered to exhibit herbicidal efficacy by destroying membranes of plants (site of action: uncoupling, HRAC classification: M), such as dinitrophenol-based herbicidal ingredients such as dinoseb and dinoterb;

herbicidal ingredients which are considered to exhibit herbicidal efficacy by inhibiting cell wall synthesis of plants

(site of action: inhibition of cell wall synthesis, HRAC classification: L), such as triazolocarboxamide-based herbicidal ingredients such as flupoxam; nitrile-based herbicidal ingredients such as dichlobenil and chlorthiamid; and benzamide-based herbicidal ingredients such as isoxaben; and

other herbicidal ingredients which exhibit herbicidal efficacy (site of action: unknown site of action, HRAC classification: Z), such as MSMA, DSMA, endothal, sodium chlorate, pelargonic acid, fosamine-ammonium, flamprop-isopropyl, difenzoquat, bromobutide, chlorflurenol, cinmethylin, cumyluron, dazomet, daimuron, methyldymron, etobenzanid, metam (matam), oxaziclomefone, pyributicarb, indanofan, and HOK-201.

Among those, in the present invention, the effect of reducing phytotoxicity with respect to the herbicidal ingredients having the indoleacetic acid-like activity (HRAC classification: O), the photosynthesis (Photochemistry II) inhibitors (HRAC classification: C1 to C3), the inhibition of a protoporphyrinogen oxidase (HRAC classification: E), the pigment biosynthesis inhibitors (HRAC classification: F1 to F4), the acetyl-CoA carboxylase inhibitors (HRAC classification: A), the inhibition of VLCFA (HRAC classification: K3), the acetolactate synthase inhibitors (HRAC classification: B), the inhibition of an EPSP synthase (HRAC classification: G), the inhibition of a glutamine synthase (HRAC classification: H), the inhibition of cell mitosis/microtubule formation (HRAC classification: K2), the inhibition of lipid synthesis (non-ACCase inhibition) (HRAC classification: N), and other efficacy (HRAC classification: Z) are good,

furthermore, the effect of reducing phytotoxicity with respect to the herbicidal ingredients having the photosynthesis inhibitors, the protoporphyrinogen oxidase inhibitors, the pigment biosynthesis inhibitors, the acetyl-CoA carboxylase inhibitors, the inhibition of VLCFA, the inhibition of an acetolactate synthase, the inhibition of an EPSP synthase, the inhibition of a glutamine synthase, the inhibition of lipid synthesis (Non-ACCase inhibition), and other efficacy are good, and

in addition, the effect of reducing phytotoxicity with respect to the herbicidal ingredients having the protoporphyrinogen oxidase inhibitors, acetyl-CoA carboxylase inhibitors, the inhibition of VLCFA, the inhibition of an acetolactate synthase, and other efficacy are good.

Moreover, examples of the herbicidal ingredients in a case where the beneficial plant is lawn grass ("herbicidal ingredients for lawn grass") include MCPP, S-metolachlor, ioxynil, asulam, atrazine, amicarbazone, alachlor, isoxaben, imazaquin, imazosulfuron, ethoxysulfuron, etobenzanid, oxadiargyl, oxaziclomefone, oryzalin, cafenstrole, carfentrazone-ethyl, cumyluron, glyphosate-isopropylamine, glufosinate, chlorimuron-ethyl, chlorphthalim, cyanazine, cyclosulfamuron, dithiopyr, triclopyr, trifluralin, napropamide, halosulfuron-methyl, bispyribac-sodium, pyrazosulfuron-ethyl, pyraflufen-ethyl, pyributicarb, pyroxasulfone, butamifos, flazasulfuron, flufenacet, flupoxam, flumioxazin, prodiamine, propyzamide, florasulam, bentazone, pendimethalin, benfuresate, foramsulfuron, mesotrione, metamifop, metsulfuron-methyl, metolachlor, rimsulfuron, and lenacil.

Examples of the herbicidal ingredients in a case where the beneficial plant is wheat ("herbicidal ingredients for wheat") include indanofan, esprocarb, glyphosate-ammonium, glyphosate-isopropylamine, glufosinate, diflufenican, thifensulfuron-methyl, trifluralin, pyraflufen-ethyl, flufenacet, prosulfocarb, prometryn, bentazone, pendimethalin, and linuron.

Examples of the herbicidal ingredients in a case where the beneficial plant is maize ("herbicidal ingredients for maize") include S-metolachlor, atrazine, alachlor, glyphosate-ammonium, glyphosate-isopropylamine, diquat, dimethenamid, dimethenamid-P, thifensulfuron-methyl, topramezone, nicosulfuron, paraquat, halosulfuron-methyl, fluthiacet-methyl, prosulfocarb, prometryn, bentazone, pendimethalin, mesotrione, metolachlor, and linuron.

Examples of the herbicidal ingredients in a case where the beneficial plant is rapeseed ("herbicidal ingredients for rapeseed") include glufosinate, sethoxydim, and trifluralin.

Examples of the herbicidal ingredients in a case where the beneficial plant is rice ("herbicidal ingredients for rice") include MCPB, azimsulfuron, imazosulfuron, indanofan, esprocarb, ethoxysulfuron, etobenzanid, oxadiazon, oxadiargyl, oxaziclomefone, cafenstrole, carfentrazone-ethyl, cumyluron, glyphosate-ammonium, glyphosate-isopropylamine, clomeprop, cyclosulfamuron, diquat, cyhalofop-butyl, dimethametryn, simetryn, daimuron, thenylchlor, tefuryltrione, trifluralin, paraquat, halosulfuron-methyl, bispyribac-sodium, pyraclonil, pyrazoxyfen, pyrazosulfuron-ethyl, pyraflufen-ethyl, pyriftalid, pyributicarb, pyrimisulfan, pyriminobac-methyl, fentrazamide, butachlor, butamifos, pretilachlor, propyrisulfuron, prometryn, bromobutide, penoxsulam, bensulfuron-methyl, benzobicyclon, benzofenap, bentazone, pendimethalin, pentoxazone, benfuresate, mesotrione, metamifop, mefenacet, molinate, and chlorate.

Examples of the herbicidal ingredients in a case where the beneficial plant is soybean ("herbicidal ingredients for soybean") include S-metolachlor, alachlor, quizalofop-ethyl, glyphosate-ammonium, glyphosate-isopropylamine, glufosinate, clethodim, diquat, dimethenamid, dimethenamid-P, sethoxydim, tepraloxydim, trifluralin, paraquat, pyraflufen-ethyl, fluthiacet-methyl, flumioxazin, prometryn, bentazone, pendimethalin, metolachlor, and linuron.

The effect of reducing phytotoxicity with respect to imazosulfuron, pyriminobac-methyl, bromobutide, pyrazosulfuron-ethyl, propyrisulfuron, bensulfuron-methyl, bispyribac-sodium, penoxsulam, cafenstrole, pyributicarb, pyraclonil, cyhalofop-butyl, or pretilachlor as a particularly specific herbicidal ingredient is good.

The herbicidal ingredient used in the present invention may be the herbicidal ingredient as it is or may be made into a formulation formed in various dosage forms such as a dustable powder, a granule, a wettable powder, a water soluble powder, a water dispersible granule, a water soluble granule, a suspension concentrate, and an emulsifiable concentrate. Known additives and carriers can be used in the process of preparing formulations. As the herbicidal ingredient made into a formulation, a commercially available product may be used, and examples of the commercially available product include TAKE OFF (registered trademark) granules (a product with a content of 0.3% by mass of imazosulfuron, manufactured by Sumitomo Chemical Co., Ltd.), HIECLEAN (registered trademark) 1-kg granules (a product with a content of 1.2% by mass of pyriminobac-methyl, manufactured by Kumiai Chemical Industry Co., Ltd.), SHOKINY (registered trademark) 250 grams (a product with a content of 24% by mass of bromobutide, manufactured by Kumiai Chemical Industry Co., Ltd.), SIRIUS (registered trademark) granules (a product with a content of 0.07% by mass of pyrazosulfuron-ethyl, manufactured by Nissan Chemical Co., Ltd.), ZETA-ONE (registered trademark) 1-kg granules (a product with a content of 0.9% by mass of propyrisulfuron, manufactured by Sumitomo Chemical Co., Ltd.), ZARK (registered trademark) Granule 25 (a product with a content of 0.25% by mass of bensulfuron-methyl, manufactured by DuPont Productions Agriscience), a NOMINEE (registered trademark) liquid (a product with a content of 2% by mass of bispyribac-sodium, manufactured by Kumiai Chemical Industry Co., Ltd.), WIDE ATTACK (registered trademark) SC (a product with a content of 3.6% by mass of penoxsulam, manufactured by Dow Chemical Japan Co., Ltd.), MIC Kusatriace (registered trademark) L Jumbo (a product with a content of 7% by mass of cafenstrole, manufactured by Mitsui Chemicals Agro, Inc.), EIGEN (registered trademark) wettable powder (a product with a content of 47% by mass of pyributicarb, manufactured by Nippon Soda Co., Ltd.), PYRACLON (registered trademark) 1-kg granules (a product with a content of 1.8% by mass of pyraclonil, manufactured by Kyoyu Agri Co., Ltd.), AGROS (registered trademark) Clincher 1-kg granules (a product with a content of 1.8% by mass of cyhalofop-butyl, manufactured by Sumitomo Chemical Co., Ltd.), AGREEN (registered trademark) water dispersible granules (a product with a content of 70% by mass of pyrazosulfuron-ethyl, manufactured by Nissan Chemical Co., Ltd.), and an ELIJAN EW emulsifiable concentrate (a product with a content of 38.5% by mass of pretilachlor, manufactured by Syngenta Japan Co., Ltd.).

((C) Surfactant)

It is preferable that the safener composition of the present invention further include a surfactant. The surfactant may be mixed after being incorporated into each of picarbutrazox and the herbicidal ingredient, or may be mixed after mixing picarbutrazox and the herbicidal ingredient. By incorporating the surfactant, it is possible to improve the dispersibility of picarbutrazox and/or the herbicidal ingredient in water, the spreadability to weeds, and the like. The surfactant used in the present invention is not particularly limited as long as it is a surfactant used in agrochemical formulations. Specific examples of the surfactant include nonionic surfactants typified by sugar ester-type surfactants such as a sorbitan fatty acid ester (C12-18), a POE sorbitan fatty acid ester (C12-18), and a sucrose fatty acid ester; fatty acid ester-type surfactants such as a POE fatty acid ester (C12-18), a POE resin acid ester, and a POE fatty acid diester (C12-18); alcohol-type surfactants such as a POE alkyl ether (C12-18); ether-type surfactants of POE aryl ethers such as a POE benzyl phenyl ether, a POE monostyryl phenyl ether, a POE distyryl phenyl ether, and a POE tristyryl phenyl ether; alkyl phenol-type surfactants such as a POE alkyl (C8-12) phenyl ether, a POE dialkyl (C8-12) phenyl ether, and a POE alkyl (C8-12) phenyl ether formalin condensate; a polyoxyethylene/polyoxypropylene block polymer; polyoxyethylene/polyoxypropylene block polymer-type surfactants such as an alkyl (C12-18) polyoxyethylene/polyoxypropylene block polymer ether; alkylamine-type surfactants such as a POE alkylamine (C12-18) and a POE fatty acid amide (C12-18); bisphenol-type surfactants such as a POE fatty acid bisphenyl ether; polyaromatic ring-type surfactants such as POA benzyl phenyl (or phenyl phenyl) ether and a POA styryl phenyl (or phenyl phenyl) ether; silicon-based and fluorine-based surfactants such as POE ether- and ester-type, silicon- and fluorine-based surfactants; vegetable oil-type surfactants such as a POE castor oil and a POE hydrogenated castor oil; and the like;

anionic surfactants typified by sulfate-type surfactants such as an alkyl sulfate (C12-18, Na, NH4, alkanolamine), a POE alkyl ether sulfate (C12-18, Na, NH4, alkanolamine), a POE alkyl phenyl ether sulfate (C12-18, NH4, alkanolamine), a POE benzyl (or styryl) phenyl (or phenyl phenyl) ether sulfate (Na, NH4, alkanolamine), and a polyoxyethylene -polyoxypropylene block polymer sulfate (Na, NH4, alkanolamine); sulfonate-type surfactants such as a paraffin (alkane) sulfonate (C12-22, Na, Ca, alkanolamine), an AOS (C14-16, Na, alkanolamine), a dialkyl sulfosuccinate (C8-12, Na, Ca, Mg), an alkylbenzene sulfonate (C12, Na, Ca, Mg, NH4, alkylamine, alkanol, amine, cyclohexylamine), a mono- or dialkyl (C3-6) naphthalene sulfonate (Na, NH4, alkanolamine, Ca, Mg), a naphthalene sulfonate-formalin condensate (Na, NH4), an alkyl (C8-12) diphenyl ether disulfonate (Na, NH4), a lignin sulfonate (Na, Ca), a POE alkyl (C8-12) phenyl ether sulfonate (Na), and a POE alkyl (C12-18) ether sulfosuccinic acid half-ester (Na); carboxylic acid-based surfactants such as a carboxylic acid-based fatty acid salt (C12-18, Na, K, NH4, alkanolamine), a N-methyl-fatty acid sarcosinate (C12-18, Na), and a resinate (Na, K); phosphate-based surfactants

such as a POE alkyl (C12-18) ether phosphate (Na, alkanolamine), a POE mono- or dialkyl (C8-12) phenyl ether phosphate (Na, alkanolamine), a POE benzylated (or styrylated) phenyl (or phenyl phenyl) ether phosphate (Na, alkanolamine), a polyoxyethylene-polyoxypropylene block polymer (Na, alkanolamine), a phosphatidylcholine-phosphatidyl ethanol imine (lecithin), and an alkyl (C8-12) phosphate; and the like;
cationic surfactants typified by ammonium-type surfactants such as an alkyl trimethyl ammonium chloride (C12-18), a methyl polyoxyethylene alkylammonium chloride (C12-18), an alkyl N-methylpyridium bromide (C12-18), a mono- or dialkyl (C12-18) methylated ammonium chloride, and an alkyl (C12-18) pentamethylpropylene diamine dichloride; benzalkonium-type surfactants such as an alkyldimethylbenzalkonium chloride (C12-18), and a benzethonium chloride (octylphenoxyethoxyethyldimethylbenzylammonium chloride); and the like; and
amphoteric surfactants typified by betaine-type surfactants such as a dialkyl (C8-12) diaminoethyl betaine and an alkyl (C12-18) dimethylbenzyl betaine; glycine-type surfactants such as a dialkyl (C8-12) diaminoethylglycine and an alkyl (C12-18) dimethylbenzyl glycine.

The "POE" is an abbreviation for polyoxyethylene. Further, as the meaning of the number added with "C" described in parentheses, for example, the description of an "alkyl (C12-18)" indicates an alkyl having 12 to 18 carbon atoms.
The surfactants may be used alone or in combination of two or more kinds thereof.
The mass ratio of the surfactant to the picarbutrazox included in the safener composition of the present invention is not particularly limited, but is preferably 0 to 60, more preferably 0.005 to 20, and still more preferably 0.01 to 2.

((D) Other Components)

The safener composition of the present invention can further include, as other components, a pH adjuster, a colorant, an antifoaming agent, a specific gravity adjusting agent, an antioxidant, an ultraviolet absorber, an anti-drift agent, a mixing improver, a moisturizing agent, a spreading agent, a fixing agent, a chelating agent, a fragrance, an organic solvent, water, or the like. Such other components may be contained in each of the picarbutrazox and the herbicidal ingredient and then mixed, or the picarbutrazox and the herbicidal ingredient may be mixed and then the other components may be mixed therewith.
The mass ratio of such other components to the picarbutrazox each included in the safener composition of the present invention is not particularly limited, but is preferably 0 to 200, more preferably 1 to 100, and still more preferably 5 to 20.

(Preferable Range)

A range of the mass ratios of the picarbutrazox (A), the herbicidal ingredient (B), the surfactant (C), and other components (D) in the safener composition of the present invention with respect to 100% by mass of the total mass of the components (A) to (D), with no inclusion of water for dilution, is preferably as follows:

| | |
|---|---|
| (A) Picarbutrazox | 0.5% by mass to 50% by mass |
| (B) Herbicidal ingredient | 0.5% by mass to 60% by mass |
| (C) Surfactant | 0% by mass to 30% by mass |
| (D) Other components | 0% by mass to 99% by mass; |

more preferably as follows:

| | |
|---|---|
| (A) Picarbutrazox | 1% by mass to 20% by mass |
| (B) Herbicidal ingredient | 1% by mass to 60% by mass |
| (C) Surfactant | 0.1% by mass to 20% by mass |
| (D) Other components | 20% by mass to 97.9% by mass; and |

still more preferably as follows:

| | |
|---|---|
| (A) Picarbutrazox | 5% by mass to 10% by mass |
| (B) Herbicidal ingredient | 5% by mass to 30% by mass |
| (C) Surfactant | 0.1% by mass to 10% by mass |
| (D) Other components | 50% by mass to 89.9% by mass. |

The preferable mass ratio of the picarbutrazox (A) to the herbicidal ingredient (B) in the safener composition of the present invention is preferably 0.001 to 1,000, more preferably 0.005 to 200, still more preferably 0.01 to 120, even still more preferably 0.05 to 60, and even further still more preferably 0.5 to 6, in terms of the component (B)/the component (A).

(Formulation Containing Safener Composition)

The safener composition of the present invention may be prepared in various dosage forms of a dustable powder, a granule, a wettable powder, a water soluble powder, a water dispersible granule, a water soluble granule, a suspension concentrate (a suspo-emulsion, an emulsion oil in water, or a flowable), and an emulsifiable concentrate. Known additives, carriers, and the like can be used in the process of preparing formulations. For preparing a formulation, the picarbutrazox and the herbicidal ingredient may be separately made into a formulation and then mixed, or the picarbutrazox and the herbicidal ingredient may be mixed and then made into a formulation. In a case where they are separately made into formulations, the same type of formulations may be prepared, mixed, and then diluted with water or the like for use; may be diluted with water or the like, and then mixed and used; or may be diluted with water or the like and then sown separately while not mixing; and in a case of being sown separately, the both may be sown at the same time or one may be sown and then the other may be sown.

(Water for Dilution)

The liquid used for being "diluted with water or the like" is not particularly limited as long as it is used, for example, to dilute a safener, a safener composition, a herbicidal ingredient, a safener made into a formulation, a safener composition made into a formulation, a herbicidal ingredient made into a formulation, or the like, thus making it easier to spray, but examples thereof include tap water, industrial water, well water, river water, and groundwater. In addition, it can also be simply called "water for dilution".

(Additive for Preparing Formulation)

The additive for preparing a formulation is not particularly limited, and additives which are generally used in agrochemical formulations can be used. For example, in a case of a suspension concentrate, water, an antifoaming agent, or the like can be added, in a case of an emulsifiable concentrate, an organic solvent (oil-based solvent) or the like can be added, and in a case of a water dispersible granule or a water soluble granule, the additives can be contained at the time of preparing granules, and then water or the like can be added, which will be removed by drying.

(Carrier for Preparing Formulation)

A carrier can be contained to prepare a formulation such as a powder, a granule, and a wettable powder. The carrier is not particularly limited, and a carrier generally used in pesticide formulations can be used. Examples of the carrier include calcium carbonate, calcium sulfate, ammonium sulfate, potassium sulfate, sodium sulfate, sodium benzoate, silicon dioxide, diatomaceous earth (diatomite), apatite, talc, bentonite, pyrophyllite, clay, and joint soil.

(Application Method)

The method for controlling weeds while reducing harm to a beneficial plant caused by a herbicidal ingredient according to the present invention includes (1) applying the safener composition of the present invention during the cultivation of the beneficial plant, (2) applying the herbicidal ingredient while applying picarbutrazox during the cultivation of the beneficial plant, (3) applying the herbicidal ingredient and subsequently applying picarbutrazox during the cultivation of the beneficial plant, or (4) applying picarbutrazox and subsequently applying the herbicidal ingredient during the cultivation of the beneficial plant.

The application of the safener composition, picarbutrazox and/or the herbicidal ingredient of the present invention can be, for example, application of the safener composition, the picarbutrazox, and/or the herbicidal ingredient as they are, or application of the safener composition, the picarbutrazox, and/or the herbicidal ingredient after being diluted with water to a predetermined concentration. The application of the picarbutrazox and/or the herbicidal ingredient may be performed while making a formulation of the picarbutrazox and/or the herbicidal ingredient. The application can be performed by sprinkling, spraying, mixing, irrigation, or the like, depending on the dosage form. The application to soil, stem and leaf parts of weed, seeds, and the like can be carried out.

(Beneficial Plants)

The beneficial plants to be applied are not particularly limited as long as they are plants whose growth may be inhibited by depriving them of nutrients or blocking light by weeds. Preferred beneficial plants to be applied in the present invention are lawn grass, wheat, maize, rapeseed, rice, soybean, and the like. The beneficial plants at the time of application may be at any stage of growth stages, or may be at a sowing stage, a seedling stage, or the like, for example.

(Weeds Which Can Be Controlled)

The weeds which can be controlled by the safener composition or method of the present invention vary depending on a spectrum of each herbicidal ingredient, but examples thereof include:

Solanaceae weeds typified by black nightshade (Solanum nigrum), jimsonweed (Datura stramonium), and the like,
Geraniaceae weeds typified by carolina cranesbill (Geranium carolinianum) and the like,
Malvaceae weeds typified by velvetleaf (Abutilon theophrasti), prickly sida (Sida spinosa), and the like,
Convolvulaceae weeds typified by morning glory (Ipomoea spps.) such as tall morningglory (Ipomoea purpurea), bindweed (Calystegia spps.), and the like,
Amaranthaceae weeds typified by livid amaranth (Amaranthus lividus), redroot pigweed (Amaranthus retroflexus), and the like,
Compositae weeds typified by common cocklebur (Xanthium pensylvanicum) (xanthium pensylvanicum), rough cocklebur (Xanthium occidentale), common ragweed (Ambrosia artemisiifolia) (Ambrosia artemisiaefolia), sunflower (Helianthus annuus), hairy galinsoga (Galinsoga ciliata), Canada thistle (Cirsium arvense), common groundsel (Senecio vulgaris), eastern daisy fleabane (Erigeron annus), devil's beggarticks (Bidens frondosa), threelobe Beggarticks (Bidens tripartita), dandelion (Taraxacum officinale), tall fleabane (Conyza sumatrensis), mugwort (Artemisia indica var. maximowiczii), horseweed (Conyza canadensis), Philadelphia fleabane (Erigeron philadelphicus), false daisy (Eclipta thermalis), kalimeris (Aster yomena), tall goldenrod (Solidago canadensis), Jerusalem artichoke (Helianthus tuberosus), hairy beggarticks (Bidens pilosa var. Pilosa), and the like,
Cruciferae weeds typified by variable leaf yellowcress (Rorippa indica), tumble mustard (Sinapis arvensis), shepherd's-purse (Capsella bursa-pastoris) (Capsella Bursapastoris), flexuous bittercress (Cardamine flexuosa), and the like,
Polygonaceae weeds typified by knotweed (Polygonum Blumei), pale smartweed (Persicaria lapathifolia), Japanese knotweed (Fallopia japonica), Japanese dock (Rumex japonicus), wild buckwheat (Polygonum convolvulus), and the like,
Portulacaceae weeds typified by common purslane (Portulaca oleracea) and the like,
Chenopodiaceae weeds typified by common lambsquaters (Chenopodium album), figleaved goosefoot (Chenopodium ficifolium), kochia (Kochia scoparia), and the like,
Caryophyllaceae weeds typified by common chickweed (Stellaria media) and the like,
Linderniaceae weeds typified by common false pimpernel (Lindernia pyxidaria), roundleaved false pimpernel (Lindernia dubia), slender false pimpernel (Lindernia anagallidea), Azetogarashi (Lindernia micrantha), and sparrow false pimpernel (Lindernia antipoda),
Commelinaceae weeds typified by asiatic dayflower (Commelina communis) and march dayflower (Murdannia keisak), and the like
Labiatae weeds typified by dead-nettle (Lamium amplexicaule), red dead-nettle (Lamium purpureum), and the like,
Euphorbiaceae weeds typified by milk purslane (Euphorbia supina), spotted spurge (Euphorbia maculata), and the like,
Rubiaceae weeds typified by stickywilly (Galium spurium), madder (Rubia akane), skunk vine (Paederia scandens), and the like,
Violaceae weeds typified by violet (Viola mandshurica) and the like,
Leguminosae weeds such as Indian jointvetch (Aeschynomene indica), hemp sesbania (Sesbania exaltata), sicklepod (Cassia obtusifolia), white clover (Trifolium repens), Japanese clover (Lespedeza striata), common vetch (Vicia sativa) (Vicia sepium), kudzu (Pueraria lobata) (Pueraria montana), and the like,
Oxaldaseae weeds typified by creeping woodsorrel (Oxalis corniculata),
Graminaceous weeds typified by shattercane (Sorghum bicolor), fall panicum (Panicum dichotomiflorum), johnsongrass (Sorghum halepense), barnyardgrass (Echinochloa crus-galli var. crus-galli), barnyardgrass (Echinochloa crus-galli var. praticola), late watergrass (Echinochloa oryzicola), knotgrass (Paspalum distichum), Japanese barnyard millet (Echinochloa utilis), southern crabgrass (Digitaria ciliaris), goosegrass (Eleusine indica), violet crabgrass (Digitaria violascens), Bermudagrass (Cynodone dactylon), Korean lawngrass (Zoysia japonica), Goudswaard (Zoysia pacifica), smutgrass (Sporobolus fertilis), American sloughgrass (Beckmannia syzigachne), wild oat (Avena

fatua), oat (Avena sativa), Italian ryegrass (Lolium multiflorum), Blackgrass (Alopecurus myosuroides), Weeping lovegrass (Eragrostis curvula), cogongrass (Imperata cylindrica), eulaliagrass (Miscanthus sinensis), Amur silvergrass (Miscanthus sacchariflorus), green foxtail (Setaria viridis), green foxtail (Setaria faberi), Timothy grass (Phleum pratense), tall fescue (Festuca arundinacea), sweet vernal grass (Anthoxanthum odoratum), Japanese triandra grass (Themeda japonica), redtop (Agrostis gigantea), Chinese sprangletop (Leptochloa chinensis), orchardgrass (Dactylis glomerata), cholorado bluestem (Elymus tsukushiensis var. Transiens), reed canarygrass (Phalaris arundinacea), bamboo grass (Pleioblastus chino), leersia (Leersia japonica) (Homalocenchrus japonocus), annual bluegrass (Poa annua), water foxtail (Alopecurus aegualis), Sayanuka-gusa (Leersia sayanuka Ohwi), rice cutgrass (Leersia oryzoides), bunchy sedge (Cyperus polystachyos Rottb.), and the like,
Eriocaulaceae weeds typified by ashy pipewort (Eriocaulon cinereum), Eriocaulon miquelianum, Eriocaulon robustius, and the like,
Cyperaceous weeds typified by purple nutsedge (Cyperus rotundus, Cyperus esculentus), water chestnut (Eleocharis kuroguwai), Japanese bulrush (Scirpus juncoides), Shizui (Scirpus nipponicus), flat sedge (Cyperus serotinus), smallflower umbrella sedge (Cyperus difformis), rice flats edge (Cyperus iria), Hinagayatsuri (Cyperus hakonensis), green kyllinga (Cyperus brevifolius, Kyllinga brevifolia), globe fringerush (Fimbristylis miliacea), needle spikerush (Eleocharis acicularis (L.) Roem. et Schult. var. Longiseta Svenson), nees (Schoenoplectiella wallichii), lye (Scirpus juncoides var. ohwianus), spikerush (Eleocharis pellucida), globe sedge (Cyperus flavidus Retz.), saltmarsh bulrus (Scirpus martimus), and the like,
Potamogetonaceae weeds typified by Pondweed (Potamogeton distinctus) and the like,
Alismataceae weeds typified by narrowleaf waterplantain (Alisma canaliculatum), Japanese ribbon wapato (Sagittaria pygmaea), arrowhead (Sagittaria trifolia), Asian water plantain (Alisma plantago-aquatica var. orientate), and the like,
Lemnaceae weeds typified by giant duckweed (Spirodela polyrhiza), duckmeat (Lemnapaucicos tata), and the like,
Pontederiaceae weeds typified by monochoria species (Monochoria korsakowii), monochoria (Monochoria vaginalis), and the like,
Elatinaceae weeds typified by waterwort (Elatine triandra) and the like,
Lythraceae weeds typified by red stem (Ammannia multiflora), toothcup (Rotala indica), and the like,
Oenotheraceae weeds typified by fireweed ludwigia (Lidwigia epilobioides) and the like,
Araliaceae weeds typified by lawn pennywort (Hydrocotyle sibthorpioides),
Plantaginaceae weeds typified by Asiatic plantain (Plantago asiatica), vernal water-starwort (Callitriche palustris), Persian speedwell (Veronica persica), dopatorium (Dopatrium junceum), Ooabunome (Gratiola japonica), and limnophila (Limnophila sessilifolia),
Equisetaceae weeds typified by field horsetail (Equisetum arvense),
Cucurbitaceae weeds typified by bur-cucumber (Sicyos angulatus),
Asparagaceae weeds typified by mondo grass (Ophiopogon japonicus),
Apiaceae weeds typified by Water Celery (Oenanthe javanica),
Urticaceae weeds typified by ramie (Boehmeria nivea var. nipononivea),
Campanulaceae weeds typified by Asian lobelia (Lobelia chinensis) and the like,
Salviniaceae weeds typified by floating watermoss (Salvinia natans (L.) All.) and the like,
Ricciaceae weeds typified by fringed heartwort (Ricciocarpos natans), and the like,
Haloragaceae weeds typified by whorl-leaf watermilfoil (Myriophyllum verticillatum) and the like,
Characeae weeds typified by Braun’s stonewort (Chara braunii) and the like, and
Zygnemataceae weeds typified by water silk (Spirogyra) and the like.

[Examples]

Hereinafter, excellent effects that the present invention exhibits will be described with reference to Examples. However, the scope of the present invention is not limited to these Examples.

Example 1

(Preparation of Safener (A))

10 parts by mass of picarbutrazox, 2 parts by mass of polyoxyethylene aryl phenyl ether, 0.5 parts by mass of a dialkyl sulfosuccinate sodium salt, 5 parts by mass of glycerin, 0.3 parts by mass of xanthan gum, and 82.2 parts by mass of water were mixed and wet-ground to a particle size of 3 μm or less to obtain a suspension concentrate (safener (A)) containing 10% (W/W) of picarbutrazox.

(Preparation of Safener Composition (1))

OSAKINI (registered trademark) 1-kg granules (hereinafter referred to as "OSAKINI granules", manufactured by Sumitomo Chemical Co., Ltd., and containing 0.90% (W/W) of imazosulfuron (HRAC classification: B), 0.60% (W/W) of pyriminobac-methyl (HRAC classification: B), and 9.0% (W/W) of bromobutide (HRAC classification: Z)) were pulverized in a mortar to obtain a powder. 5 mg of this powder and 0.1 ml of the safener (A) obtained in Example 1 were added to 1 L of a solution for hydroponics (a solution obtained by diluting 0.5 ml of a Hyponex stock solution (manufactured by Hyponex Japan Corporation) in 1 L of water) and dispersed to obtain a safener composition (1).

(Preparation of Herbicide Liquid (1))

OSAKINI granules (manufactured by Sumitomo Chemical Co., Ltd., and containing 0.90% (W/W) of imazosulfuron, 0.60% (W/W) of pyriminobac-methyl, and 9.0% (W/W) of bromobutide) were pulverized in a mortar to obtain a powder. 5 mg of this powder was added to 1 L of a solution for hydroponics (a solution obtained by diluting 0.5 ml of Hyponex stock solution (manufactured by Hyponex Japan Corporation) in 1 L of water) and dispersed to obtain a herbicide liquid (1).

Each of the safener composition (1), the herbicide liquid (1), and the solution for hydroponics was poured into a test tube. One rice seedling (variety: Koshihikari) in the two-leaf stage was transplanted into the test tube. This was placed in an artificial meteorological instrument set to 16 hours (25°C) in the light period and 8 hours (20°C) in the dark period. After a lapse of 3 days, the number of new roots was counted. This test was performed a total of 6 times. An average value was calculated from the measured values for 6 times.

The average number of new roots generated in the test tube of the solution for hydroponics was 6.5. The average number of new roots generated in the test tube of the herbicide liquid (1) was 2.0. It can be seen that the generation of new roots was suppressed by the OSAKINI granules. By contrast, the average number of new roots generated in the test tube of the safener composition (1) was 7.0. It can be seen that the safener composition (1) can reduce the inhibition of new root development by the OSAKINI granules.

Example 2

200 ml of the safener (A) was diluted with water until the amount reached 1 L. While blowing 60 ml of the obtained diluent into 1 kg of dried seeds (not threshed, dried rice, variety: Koshihikari), iron powder and calcined gypsum were added thereto and stirred to obtain iron-coated seeds (1).

While blowing 60 ml of water into 1 kg of dried seeds (variety: Koshihikari), iron powder and calcined gypsum were added and stirred to obtain iron-coated seeds (2).

While blowing 60 ml of water into 1 kg of dried seeds (variety: Koshihikari), iron powder and calcined gypsum were added and stirred to obtain iron-coated seeds (3).

Each of the seeds (1), the seeds (2), and the seeds (3) was sown in paddy soil flooded to a depth of about 10 mm. OSAKINI granules (manufactured by Sumitomo Chemical Co., Ltd., and containing 0.90% (W/W) of imazosulfuron, 0.60% (W/W) of pyriminobac-methyl, and 9.0% (W/W) of bromobutide) were sown on the paddy soil which had been sown with each of the seeds (1) and the seeds (2) at a ratio of 1.0 kg / 10 a. Nothing was sown on the paddy soil which had been sown with the seeds (3).

They were placed in an artificial meteorological instrument set to 16 hours (25°C) in the light period and 8 hours (20°C) in the dark period for 20 days. Six seedlings of germinated seeds were randomly chosen, the root lengths were measured, and an average value thereof was calculated.

The average root length in the paddy soil which had been sown with the seeds (3) was 69.4 mm.

The average root length in the paddy soil which had been sown with the seeds (2) was 46.9 mm. It can be seen that the root growth was suppressed by the OSAKINI granules. By contrast, the average value of the root length in the paddy soil which had been sown with the seeds (1) was 67.2 mm. It can be seen that the suppression of root growth by the OSAKINI granules is reduced.

Example 3

Rice seedlings (variety: Koshihikari) that grew up to the two-leaf stage planted in a nursery box (30 x 60 x 3 cm, a soil used: about 5 L) were prepared. 1 ml of the safener (A) was diluted with 1 L of water. 1 L of the diluent was irrigated with rice seedlings and soil. After a lapse of 24 hours after irrigation, the rice seedlings were transplanted into paddy soil flooded to a depth of about 10 mm to obtain seedlings (1).

Rice seedlings (variety: Koshihikari) that grew up to the two-leaf stage planted in a nursery box (30 x 60 x 3 cm, a soil used: about 5 L) were prepared. 1 L of water was irrigated with rice seedlings and soil. After a lapse of 24

hours after irrigation, the rice seedlings were transplanted into paddy soil flooded to a depth of about 10 mm to obtain seedlings (2).

Rice seedlings (variety: Koshihikari) that grew up to the two-leaf stage planted in a nursery box (30 x 60 x 3 cm, a soil used: about 5 L) were prepared. 1 L of water was irrigated with rice seedlings and soil. After a lapse of 24 hours after irrigation, the rice seedlings were transplanted into paddy soil flooded to a depth of about 10 mm to obtain seedlings (3).

OSAKINI granules (manufactured by Sumitomo Chemical Co., Ltd., and containing 0.90% (W/W) of imazosulfuron, 0.60% (W/W) of pyriminobac-methyl, and 9.0% (W/W) of bromobutide) were sown on the paddy soil where the seedlings (1) and the seedlings (2) were cultivated at a ratio of 1.0 kg / 10 a. Nothing was sown on the paddy soil where the seedlings (3) were cultivated. They were placed in an artificial meteorological instrument set to 16 hours (25°C) in the light period and 8 hours (20°C) in the dark period for 7 days. Then, the seedlings were dried at 80°C for 24 hours to obtain dried seedlings. The weights of the shoot and the root of the dried seedlings were measured.

In the paddy soil in which the seedlings (3) were planted, the weights of the shoot and the root of the dried seedlings were 27.0 mg and 21.9 mg, respectively.

In the paddy soil in which the seedlings (2) were planted, the weights of the shoot and the root of the dried seedlings were 24.9 mg and 18.8 mg, respectively. It can be seen that the growth of the shoot and the root was suppressed by the OSAKINI granules.

By contrast, in the paddy soil in which the seedlings (1) were planted, the weights of the shoot and the root of the dried seedling were 27.8 mg and 21.7 mg, respectively. It can be seen that the growth inhibition of the shoot and the root caused by the OSAKINI granules was reduced.

Example 4

Diluents (1) to (6) were prepared by diluting 0.1 ml, 0.5 ml, 1 ml, 5 ml, 10 ml, and 50 ml of the safener (A) with water until each of these reached 1 L.

Rice seedlings (variety: Koshihikari) at the 2.5-leaf stage were transplanted to paddy soil flooded to a depth of about 10 mm, including seeds of Scirpus juncoides which is a noxious weed. The paddy soil in which the rice seedlings were planted was divided into 8 equal groups and classified into groups 1 to 8.

In the groups 1 to 7, the OSAKINI granules (manufactured by Sumitomo Chemical Co., Ltd., and containing 0.90% (W/W) of imazosulfuron, 0.60% (W/W) of pyriminobac-methyl, and 9.0% (W/W) of bromobutide) were sown on the soil and the stem and leaf parts of the crops at a ratio of 1.0 kg / 10 a.

Nothing were sown on the group 8.

Next, the diluents (1) to (6) were each sown on the soil and the stem and leaf parts of the crops at a ratio of 100 L / 10 a in the groups 1 to 6 (treated groups).

Water was sprayed on the soil and the stem and leaf parts of the crops at a ratio of 100 L / 10 a in the groups 7 and 8 (a comparative group and an untreated group).

They were placed in an artificial meteorological instrument set to 16 hours (25°C) in the light period and 8 hours (20°C) in the dark period for 5 days. The length of newly developed roots was measured. In addition, the growth condition of Scirpus juncoides as a noxious weed was calculated as a growth suppression rate represented by the following equation. The results are shown in Table 1.

Growth suppression rate (%) = 100 - (Total length of Scirpus juncoides in treated group or comparative group / Total length of Scirpus juncoides in untreated group) x 100

[Table 1]

| | | Safener (A) [m1] | Rice root length [mm] | Growth suppression rate [%] |
|---|---|---|---|---|
| Treated group | Group 1 | 0.1 | 12.2 | >98 |
| | Group 2 | 0.5 | 12.9 | >98 |
| | Group 3 | 1 | 13.0 | >98 |
| | Group 4 | 5 | 13.1 | >98 |
| | Group 5 | 10 | 13.0 | >98 |
| | Group 6 | 50 | 12.2 | >98 |
| Comparative group | Group 7 | 0 | 8.6 | >98 |
| Untreated group | Group 8 | 0 | 12.9 | - |

From Table 1, it can be seen that in a case where the safener (A) is applied, the growth of rice is not inhibited even in a case where the OSAKINI granules including the herbicidal ingredient are sown on Scirpus juncoides which is a noxious weed.

Example 5

(Preparation of Safener Composition (2))

A solution obtained by dissolving 0.01 mg of pyrazosulfuron-ethyl in 10 μl of DMSO and 0.1 ml of the safener (A) obtained in Example 1 were added to 1 L of a solution for hydroponics (a solution obtained by diluting 0.5 ml of a Hyponex stock solution (manufactured by Hyponex Japan Corporation) in 1 L of water) and dispersed to obtain a safener composition (2).

(Preparation of Herbicide Liquid (2))

A solution obtained by dissolving 0.01 mg of pyrazosulfuron-ethyl (HRAC classification: B) in 10 μl of DMSO was added to 1 L of a solution for hydroponics (a solution obtained by diluting 0.5 ml of a Hyponex stock solution (manufactured by Hyponex Japan Corporation) in 1 L of water) and dispersed to obtain a herbicide liquid (2).

Each of the safener composition (2), the herbicide liquid (2), and the solution for hydroponics was poured into a test tube. One rice seedling (variety: Koshihikari) in the two-leaf stage was transplanted into the test tube. This was placed in an artificial meteorological instrument set to 16 hours (25°C) in the light period and 8 hours (20°C) in the dark period. After a lapse of 5 days, the number of new roots was counted. This test was performed a total of 6 times. An average value was calculated from the measured values for 6 times.

The average number of new roots generated in the test tube of the solution for hydroponics was 4.0. The average number of new roots generated in the test tube of the herbicide liquid (2) was 3.3. It can be seen that the development of new roots was suppressed by pyrazosulfuron-ethyl. By contrast, the average number of new roots generated in the test tube of the safener composition (2) was 3.8, respectively. It can be seen that the safener composition (2) can reduce the inhibition of new root development by pyrazosulfuron-ethyl.

Examples 6 to 15

(Preparation of Safener Compositions (3) to (12))

Safener compositions (3) to (12) were obtained by the same method as that for the safener composition (2), with the exception that 0.01 mg of pyrazosulfuron-ethyl of the safener composition (2) of Example 5 was replaced with each of the herbicides (5) to (15) described in Table 2.

(Preparation of Herbicide Liquids (3) to (12))

Herbicide liquids (3) to (12) were obtained by the same method as that for the herbicide liquid (2), with the exception that 0.01 mg of pyrazosulfuron-ethyl of the herbicide liquid (2) of Example 5 was replaced with each of the herbicides (5) to (15) described in Table 2.

[Table 2]

| Herbicide | Name of herbicide | HRAC Classification | Amount used | Safener composition | Herbicide liquid |
|---|---|---|---|---|---|
| Herbicide (5) | Pyrazosulfuron-ethyl | B | 0.01 mg | (2) | (2) |
| Herbicide (6) | Propyrisulfuron | B | 0.01 mg | (3) | (3) |
| Herbicide (7) | Bensulfuron-methyl | B | 0.001 mg | (4) | (4) |
| Herbicide (8) | Bispyribac-sodium | B | 0.001 mg | (5) | (5) |
| Herbicide (9) | Penoxsulam | B | 0.001 mg | (6) | (6) |
| Herbicide (10) | Cafenstrole | K3 | 0.001 mg | (7) | (7) |
| Herbicide (11) | Pyributicarb | Z | 0.001 mg | (8) | (8) |
| Herbicide (12) | Pyraclonil | E | 1.0 mg | (9) | (9) |
| Herbicide (13) | Cyhalofop-butyl | A | 0.01 mg | (10) | (10) |
| Herbicide (14) | Pyrazosulfuron-ethyl | B | 0.01 mg | (11) | (11) |
| Herbicide (15) | Pretilachlor | K3 | 0.01 mg | (12) | (12) |

As is clear from Table 2, the herbicide (5) and the herbicide (14) are the same, and the safener composition (2) and the herbicide liquid (2) are the same as the safener composition (11) and the herbicide liquid (11), respectively.

An average value of the root lengths in the test tubes of the solution for hydroponics, an average value of the root lengths in the test tubes of the herbicide liquids (3) to (12), and an average value of the root lengths in the test tubes of the safener compositions (3) to (12) are as shown in Table 3. From the results, it can be seen that the safener compositions (3) to (12) can reduce the suppression of root growth by the herbicides (6) to (15).

[Table 3]

| Herbicide | Condition of new roots in test tube of solution for hydroponics | Condition of new roots in test tube of herbicide liquid | Condition of new roots in test tube of safener composition |
|---|---|---|---|
| Herbicide (5) | 4.0 roots | 3.3 roots | 3.8 roots |
| Herbicide (6) | 40.5 mm | 30.0 mm | 40.5 mm |
| Herbicide (7) | 40.5 mm | 36.5 mm | 40.8 mm |
| Herbicide (8) | 39.5 mm | 32.3 mm | 35.5 mm |
| Herbicide (9) | 39.5 mm | 29.8 mm | 39.3 mm |
| Herbicide (10) | 39.5 mm | 28.0 mm | 36.8 mm |
| Herbicide (11) | 39.5 mm | 33.3 mm | 39.0 mm |
| Herbicide (12) | 39.5 mm | 15.5 mm | 37.0 mm |
| Herbicide (13) | 39.5 mm | 32.5 mm | 34.0 mm |
| Herbicide (14) | 45.2 mm | 29.2 mm | 39.8 mm |

(continued)

| Herbicide | Condition of new roots in test tube of solution for hydroponics | Condition of new roots in test tube of herbicide liquid | Condition of new roots in test tube of safener composition |
|---|---|---|---|
| Herbicide (15) | 45.2 mm | 38.8 mm | 42.2 mm |

In Table 3, the condition of new roots indicates an average number of roots generated with regard to the herbicide (5) and indicates an average value of the root lengths with regard to the herbicides (6) to (15).

Comparative Example 1

(Preparation of Comparative Safener Composition (1))

A comparative safener composition (1) was obtained by the same method as that for the safener composition (2), with the exception that 0.1 ml of the safener (A) of Example 5 was replaced with a solution obtained by dissolving 0.01 mg of α-naphthylacetamide in 10 μl of DMSO.

(Preparation of Comparative Herbicide Liquid (1))

A solution obtained by dissolving 0.01 mg of pyrazosulfuron-ethyl in 10 μl of DMSO was added to 1 L of a solution for hydroponics (a solution obtained by diluting 0.5 ml of a Hyponex stock solution (manufactured by Hyponex Japan Corporation) in 1 L of water) and dispersed in the same manner as for the herbicide liquid (2) of Example 5 to obtain a comparative herbicide liquid (1).

The number of new roots generated was measured by the same method as that in Example 5. The results are shown in Table 4 together with the results of the safener (A). The safener (A) was capable of reducing the inhibition of new root development by pyrazosulfuron-ethyl, but α-naphthylacetamide as a plant regulator had no safener effect.

Comparative Example 2

(Preparation of Comparative Safener Composition (2))

A comparative safener composition (2) was obtained by the same method as that for the safener composition (2), with the exception that 0.1 ml of the safener (A) of Example 5 was replaced with a solution obtained by dissolving 0.01 mg of indole butyric acid in 10 μl of DMSO.

(Preparation of Comparative Herbicide Liquid (2))

A solution obtained by dissolving 0.01 mg of pyrazosulfuron-ethyl in 10 μl of DMSO was added to 1 L of a solution for hydroponics (a solution obtained by diluting 0.5 ml of a Hyponex stock solution (manufactured by Hyponex Japan Corporation) in 1 L of water) and dispersed in the same manner as that for the herbicide liquid (2) of Example 5 to obtain a comparative herbicide liquid (2).

The number of new roots generated was measured by the same method as in Example 5. The results are shown in Table 4 together with the results of the safener (A). The safener (A) was capable of reducing the inhibition of new root development by pyrazosulfuron-ethyl, but the indole butyric acid as a plant regulator had no safener effect.

[Table 4]

| Safener | Condition of new roots in test tube of solution for hydroponics | Condition of new roots in test tube of herbicide liquid | Condition of new roots in test tube of safener composition |
|---|---|---|---|
| Safener (A) | 4.0 roots | 3.3 roots | 3.8 roots |
| α-Naphthylacetamide | 4.0 roots | 3.3 roots | 3.3 roots |
| Indole butyric acid | 5.7 roots | 5.0 roots | 5.0 roots |

Example 16

(Preparation of Safener Composition (13))

A safener composition (13) was obtained by the same method as that for the safener composition (2), with the exception that 0.01 mg of pyrazosulfuron-ethyl of the safener composition (2) of Example 5 was replaced with 0.1 mg of pyrazosulfuron-ethyl.

(Preparation of Herbicide Liquid (13))

A herbicide liquid (13) was obtained by the same method as that for the herbicide liquid (2), with the exception that 0.01 mg of pyrazosulfuron-ethyl of the herbicide liquid (2) of Example 5 was replaced with 0.1 mg of pyrazosulfuron-ethyl.

Each of the safener composition (13), the herbicide liquid (13), and the solution for hydroponics was poured into a test tube. One rice seedling (variety: Koshihikari) in the two-leaf stage was transplanted into the test tube. This was placed in an artificial meteorological instrument set to 16 hours (25°C) in the light period and 8 hours (20°C) in the dark period. After a lapse of 5 days, the phytotoxicity caused in the first leaf and a leaf sheath thereof was visually observed, and the phytotoxicity index was assigned according to the following criteria. This test was performed a total of 6 times. An average value (hereinafter referred to as an "average phytotoxicity index") was calculated from the measured values for 6 times.

Phytotoxicity Index and Condition thereof

0: There is no phytotoxicity.
1: Yellowing or necrosis is recognized in less than 10% of an area.
2: Yellowing or necrosis is recognized in 10% or more and less than 20% of an area.
3: Yellowing or necrosis is recognized in 20% or more and less than 30% of an area.
4: Yellowing or necrosis is recognized in 30% or more and less than 40% of an area.
5: Yellowing or necrosis is recognized in 40% or more and less than 50% of an area.
6: Yellowing or necrosis is recognized in 50% or more and less than 60% of an area.
7: Yellowing or necrosis is recognized in 60% or more and less than 70% of an area.
8: Yellowing or necrosis is recognized in 70% or more and less than 80% of an area.
9: Yellowing or necrosis is recognized in 80% or more and less than 90% of an area.
10: Yellowing or necrosis is recognized in 90% or more of an area.

As a result, the solution for hydroponics had an average phytotoxicity index of 0.

The average phytotoxicity index of the herbicide liquid (13) was 3.8. By contrast, the average phytotoxicity index of the safener composition (13) was 1.8. It can be seen that the phytotoxicity of the stem and leaf parts caused by pyrazosulfuron-ethyl could be reduced. It was found that the phytotoxicity of the herbicide was reduced since the safener (A) can reduce the phytotoxicity of the stem and leaf parts.

Example 17

(Preparation of Safener Composition (14))

A safener composition (14) was obtained by the same method as for the safener composition (2), except that 0.01 mg of pyrazosulfuron-ethyl of the safener composition (2) of Example 5 was replaced with 0.1 mg of pyraclonil.

(Preparation of Herbicide Liquid (14))

A herbicide liquid (14) was obtained by the same method as that for the herbicide liquid (2), with the exception that 0.01 mg of pyrazosulfuron-ethyl of the herbicide liquid (2) of Example 5 was replaced with 0.1 mg of pyraclonil.

The average phytotoxicity index was calculated by the same method as in Example 16.

As a result, the solution for hydroponics had an average phytotoxicity index of 0.

The average phytotoxicity index of the herbicide liquid (14) was 1.7. By contrast, the average phytotoxicity index of the safener composition (14) was 0.3. It can be seen that the phytotoxicity of the stem and leaf parts caused

by pyraclonil could be reduced. It was found that the phytotoxicity of the herbicide was reduced since the safener (A) could reduce the phytotoxicity of the stem and leaf parts.

Example 18

(Preparation of Safener Composition (15))

A safener composition (15) was obtained by the same method as that for the safener composition (2), with the exception that 0.01 mg of pyrazosulfuron-ethyl of the safener composition (2) of Example 5 was replaced with 1.0 mg of pretilachlor.

(Preparation of Herbicide Liquid (15))

A herbicide liquid (15) was obtained by the same method as that for the herbicide liquid (2), with the exception that 0.01 mg of pyrazosulfuron-ethyl of the herbicide liquid (2) of Example 5 was replaced with 1.0 mg of pretilachlor.

The average phytotoxicity index was calculated by the same method as that described in Example 16.

As a result, the solution for hydroponics had an average phytotoxicity index of 0.

The average phytotoxicity index of the herbicide liquid (15) was 2.7. By contrast, the average phytotoxicity index of the safener composition (15) was 0.7. It can be seen that the phytotoxicity of the stem and leaf parts caused by pretilachlor could be reduced. It was found that the phytotoxicity of the herbicide was reduced since the safener (A) could reduce the phytotoxicity of the stem and leaf parts.

Example 19

0.5 g of the safener (A) was diluted with water to make 30 ml, and a safener diluent was prepared. 30 ml of the safener diluent was sprayed on 1.0 kg of soybean seeds and stirred for coating to obtain soybean seeds (1).

30 ml of water were sprayed on 1.0 kg of soybean seeds and stirred to obtain soybean seeds (2).

30 ml of water were sprayed on 1.0 kg of soybean seeds and stirred to obtain soybean seeds (3).

The soybean seeds (1), the soybean seeds (2), and the soybean seeds (3) were each sown in red soil at a ratio of 10,000 grains / 10 a. Flumio WDG (manufactured by Sumitomo Chemical Co., Ltd., and containing 50.0% (W/W) of flumioxazin) was sown on the red soil which had been sown with each of the soybean seeds (1) and the soybean seeds (2) at a ratio of 10.0 g / 10 a. Nothing were sown on the red soil which had been sown with the soybean seeds (3).

They were placed in a glass greenhouse for 7 days. Eight seedlings germinated "germinations" (including hypocotyls and cotyledons) were randomly selected, the phytotoxicity caused in the hypocotyls and cotyledons was visually observed, and the average phytotoxicity index was calculated based on "Phytotoxicity Index and Condition thereof".

The average phytotoxicity index of the soybean seeds (1) was 2.6, the average phytotoxicity index of the soybean seeds (2) was 4.1, and the average phytotoxicity index of the soybean seeds (3) was 0. From these results, it was confirmed that the safener (A) reduced the phytotoxicity in the hypocotyls and the cotyledons caused by flumioxazin.

[Industrial Applicability]

The safener for a herbicide of the present invention can reduce harm to a beneficial plant caused by a herbicidal ingredient included in a herbicide and the like.

According to the safener composition and the method for controlling weeds of the present invention, weeds growing in the vicinity of a beneficial plant such as lawn grass, wheat, maize, rapeseed, rice, and soybean can be controlled without inhibiting the growth of the beneficial plant.

## Claims

1. Use of picarbutrazox as a safener for herbicide.

2. The use according to claim 1, wherein the safener is applied at a sowing stage.

3. The use according to claim 1, wherein picarbutrazox is comprised in a safener composition which further comprises a herbicidal ingredient.

4. The use according to claim 3, wherein the safener composition further comprises a surfactant.

5. A method for controlling weeds while reducing harm to a beneficial plant caused by a herbicidal ingredient contained in a safener composition, the method comprising applying a safener composition comprising picarbutrazox and a herbicidal ingredient and optionally a surfactant during a cultivation of the beneficial plant.

6. A method for controlling weeds while reducing harm to a beneficial plant caused by a herbicidal ingredient, the method comprising applying picarbutrazox while applying the herbicidal ingredient during a cultivation of the beneficial plant.

7. A method for controlling weeds while reducing harm to a beneficial plant caused by a herbicidal ingredient, the method comprising applying the herbicidal ingredient and subsequently applying picarbutrazox during a cultivation of the beneficial plant.

8. A method for controlling weeds while reducing harm to a beneficial plant caused by a herbicidal ingredient, the method comprising applying picarbutrazox and subsequently applying the herbicidal ingredient during a cultivation of the beneficial plant.

9. The method according to any one of claims 5 to 8, wherein the cultivation of the beneficial plant is at a sowing stage.

10. The method according to any one of claims 5 to 8, wherein the beneficial plant is lawn grass, wheat, maize, rapeseed, rice, or soybean.

## Patentansprüche

1. Verwendung von Picarbutrazox als Safener für Herbizid.

2. Verwendung nach Anspruch 1, wobei der Safener im Stadium der Aussaat angewendet wird.

3. Verwendung nach Anspruch 1, wobei Picarbutrazox in einer Safener-Zusammensetzung enthalten ist, die außerdem einen herbiziden Wirkstoff enthält.

4. Verwendung nach Anspruch 3, wobei die Safener-Zusammensetzung außerdem ein Tensid enthält.

5. Verfahren zur Unkrautbekämpfung bei gleichzeitiger Verringerung der Schädigung einer Nutzpflanze durch einen in einer Safener-Zusammensetzung enthaltenen herbiziden Bestandteil, wobei das Verfahren die Anwendung der Safener-Zusammensetzung gemäß Anspruch 3 oder 4 während des Anbaus der Nutzpflanze umfasst.

6. Verfahren zur Unkrautbekämpfung bei gleichzeitiger Verringerung der Schädigung einer Nutzpflanze durch einen herbiziden Wirkstoff, wobei das Verfahren die Anwendung von Picarbutrazox während der Anwendung des herbiziden Wirkstoffs während des Anbaus der Nutzpflanze umfasst.

7. Verfahren zur Unkrautbekämpfung bei gleichzeitiger Verringerung der Schädigung einer Nutzpflanze durch einen herbiziden Wirkstoff, wobei das Verfahren die Anwendung des herbiziden Wirkstoffs und die anschließende Anwendung von Picarbutrazox während des Anbaus der Nutzpflanze umfasst.

8. Verfahren zur Unkrautbekämpfung bei gleichzeitiger Verringerung der Schädigung einer Nutzpflanze durch einen herbiziden Wirkstoff, wobei das Verfahren die Anwendung von Picarbutrazox und die anschließende Anwendung des herbiziden Wirkstoffs während des Anbaus der Nutzpflanze umfasst.

9. Verfahren nach einem der Ansprüche 5 bis 8, wobei der Anbau der Nutzpflanze in einem Aussaatstadium erfolgt.

10. Verfahren nach einem der Ansprüche 5 bis 8, wobei die Nutzpflanze Rasengras, Weizen, Mais, Raps, Reis oder Sojabohnen ist.

## Revendications

1. Utilisation du picarbutrazox en tant que phytoprotecteur pour herbicide.

2. Utilisation selon la revendication 1, dans laquelle le phytoprotecteur est appliqué à un stade de semis.

3. Utilisation selon la revendication 1, dans laquelle le picarbutrazox est compris dans une composition de phytoprotecteur qui comprend en outre un ingrédient herbicide.

4. Utilisation selon la revendication 3, dans laquelle la composition de phytoprotecteur comprend en outre un tensioactif.

5. Procédé de lutte contre les mauvaises herbes tout en réduisant les dommages causés à une plante bénéfique par un ingrédient herbicide contenu dans une composition de phytoprotecteur, le procédé comprenant l'application d'une composition de phytoprotecteur comprenant du picarbutrazox et un ingrédient herbicide et éventuellement un tensioactif lors d'une culture de la plante bénéfique.

6. Procédé de lutte contre les mauvaises herbes tout en réduisant les dommages causés à une plante bénéfique par un ingrédient herbicide, le procédé comprenant l'application de picarbutrazox tout en appliquant l'ingrédient herbicide pendant une culture de la plante bénéfique.

7. Procédé de lutte contre les mauvaises herbes tout en réduisant les dommages causés à une plante bénéfique par un ingrédient herbicide, le procédé comprenant l'application de l'ingrédient herbicide et ensuite l'application de picarbutrazox pendant une culture de la plante bénéfique.

8. Procédé de lutte contre les mauvaises herbes tout en réduisant les dommages causés à une plante bénéfique par un ingrédient herbicide, le procédé comprenant l'application de picarbutrazox et ensuite l'application de l'ingrédient herbicide pendant une culture de la plante bénéfique.

9. Procédé selon l'une quelconque des revendications 5 à 8, dans lequel la culture de la plante bénéfique est à un stade de semis.

10. Procédé selon l'une quelconque des revendications 5 à 8, dans lequel la plante bénéfique est l'herbe à pelouse, le blé, le maïs, le colza, le riz ou le soja.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018094483 A
- DE 102011080004 A1
- WO 2010001563 A
- JP 2014512358 W
- JP 2014509599 W
- JP 2003137875 A


### Non-patent literature cited in the description


- *CHEMICAL ABSTRACTS,* 500207-04-5